# FASCICULE DE BREVET EUROPEEN

(11) **EP 2 715 149 B1**
(45) Date de publication et mention de la délivrance du brevet: **04.03.2015**
(21) Numéro de dépôt: 12731072.0
(22) Date de dépôt: 25.05.2012
(51) Int. Cl.: F04D 29/66, F04D 29/70

(54) **DISPOSITIF D'ASPIRATION DE LIQUIDE COMPORTANT UN EMBOUT LIMITANT LA FORMATION DE VORTEX D'ASPIRATION**
FLÜSSIGKEITSSAUGVORRICHTUNG MIT WIRBELUNGSBEGRENZENDEN SAUGMUND
LIQUID SUCTION DEVICE WITH A VORTEX LIMITING MOUTH

(30) Priorité: 27.05.2011 FR 1154650
(43) Date de publication de la demande: 09.04.2014
(73) Titulaire: Snecma, 75015 Paris (FR)
(72) Inventeur: PLANTE, Romain, F-77550 Moissy-Cramayel Cedex (FR); BETTEGA, Louis, F-57220 Boucheron (FR); LOUIS, Frank, F-57730 Folschviller (FR)
(74) Mandataire: Ahner, Philippe
(86) Numéro de dépôt international: PCT/FR2012/051185
(87) Numéro de publication internationale: WO 2012/168622

(56) Documents cités:
- EP-A1- 1 122 445
- GB-A- 785 926
- JP-A- 2002 155 898
- US-A1- 2010 252 136

## Description

### DOMAINE TECHNIQUE

L'invention propose un dispositif d'aspiration de liquide comportant un embout limitant la formation de vortex d'aspiration dans le liquide.

L'invention propose plus particulièrement un dispositif d'aspiration adapté à un liquide visqueux tel qu'une résine alimentant un appareillage de réalisation de pièces en matériau composite.

### ÉTAT DE LA TECHNIQUE ANTÉRIEURE

Dans un appareillage pour la réalisation de pièces en matériau composite, les conditions d'injection de la résine sont particulièrement importantes pour empêcher l'apparition de bulles d'air dans la pièce.

Avant son injection, la résine subit une opération de dégazage consistant à évacuer par évaporation les solvants présents dans la résine, qui pourraient nuire à la qualité du matériau composite.

Cette opération de dégazage s'effectue en plaçant le volume de résine qui va être injecté dans une cuve. Le volume intérieur de la cuve est ensuite mis sous pression pour réaliser l'opération d'injection.

Les conditions de pression et de température de la résine ont un impact sur les conditions d'écoulement de la résine lors de son injection.

Notamment, une température élevée de la résine permet de fluidifier celle-ci et de faciliter son écoulement. Cependant, une température trop importante de la résine risque de provoquer un phénomène d'exothermie, c'est-à-dire que la résine conserve sa chaleur, qui augmente progressivement jusqu'à une température trop importante pouvant provoquer une explosion de la résine.

La résine est ainsi portée à une température optimale pour laquelle la fluidité de la résine est limitée.

Une autre contrainte imposée à l'installation d'injection consiste en ce que la résine doit être injectée pendant une période de temps limitée après laquelle la résine est inutilisable.

Pour cela, la pression d'injection est augmentée pour augmenter le débit de résine afin que la résine soit injectée dans la période de temps requise.

Le transfert de la résine depuis la cuve vers le dispositif d'injection s'effectue de manière connue par un tube de captage qui plonge dans la résine. L'extrémité du tube de captage est située à proximité du fond de la cuve, pour aspirer le maximum de résine.

Lors de l'aspiration de la résine, du fait de la haute pression et du débit important, il se produit un tourbillon, ou vortex, qui peut atteindre l'extrémité inférieure du tube de captage.

De l'air est alors aspiré avec la résine, ce qui peut nuire à la qualité du matériau réalisé à partir de la résine.

<Insertion page 3a>

L'invention a pour but de proposer un dispositif d'aspiration d'un liquide, notamment de résine, qui permet de limiter la formation de ce tourbillon.

### EXPOSÉ DE L'INVENTION

L'objet principal de l'invention est un dispositif d'aspiration d'un liquide contenu dans une cuve, qui comporte un tube de captage qui est reçu dans la cuve de manière telle qu'une extrémité inférieure dudit tronçon est immergée dans le liquide, dont l'extrémité inférieure du tube de captage est prolongée vers le bas par un embout de révolution d'axe principal sensiblement vertical ouvert vers le bas et comportant une collerette radiale externe, et dont l'embout comporte un corps tubulaire qui prolonge verticalement vers le bas l'extrémité inférieure du tube de captage et la collerette s'étend radialement vers l'extérieur depuis l'extrémité inférieure du corps tubulaire, caractérisé en ce que la collerette comporte des rainures radiales par rapport à l'axe principal de l'embout qui sont réalisées dans une face d'extrémité inférieure de la collerette.

L'ajout d'un embout comportant une collerette permet d'empêcher que le tourbillon n'atteigne l'orifice par lequel la résine est aspirée, empêchant alors que de l'air ne soit aussi aspiré

De préférence, chaque rainure débouche au niveau du bord périphérique externe de la collerette.

Le document US-A-2010/252136 décrit un dispositif d'aspiration d'un liquide contenu dans une cuve comportant un embout de révolution prolongeant une extrémité inférieure d'un tube de captage. Cet embout comporte un corps tubulaire et une collerette radiale située au niveau de l'extrémité inférieure du corps.

De préférence, la section de chaque rainure est déterminée de manière telle que la somme des sections de toutes les rainures est sensiblement égale à la section du tube de captage.

De préférence, la face inférieure de la collerette comporte une cavité centrale qui prolonge l'embouchure de l'embout vers le bas, et dans laquelle les rainures débouchent radialement vers l'intérieur.

De préférence, la cavité est globalement circulaire coaxiale au corps tubulaire et de diamètre supérieur ou égal au diamètre interne du corps tubulaire.

De préférence, l'embout est agencé verticalement à proximité du fond de la cuve.

De préférence, la collerette est en appui contre le fond de la cuve.

### BRÈVE DESCRIPTION DES DESSINS

D'autres caractéristiques et avantages de l'invention apparaîtront à la lecture de la description détaillée qui va suivre pour la compréhension de laquelle on se reportera aux dessins annexés dans lesquels :
- la figure 1 est une représentation schématique du dispositif d'aspiration comportant un embout selon l'invention ;
- la figure 2 est une représentation schématique en perspective vue de dessous d'un embout réalisé selon l'invention ;
- la figure 3 est une section axiale de l'embout représenté à la figure 2 ;
- la figure 4 est une vue en bout de l'embout représenté à la figure 2.

### EXPOSÉ DÉTAILLÉ DE MODES DE RÉALISATION PARTICULIERS

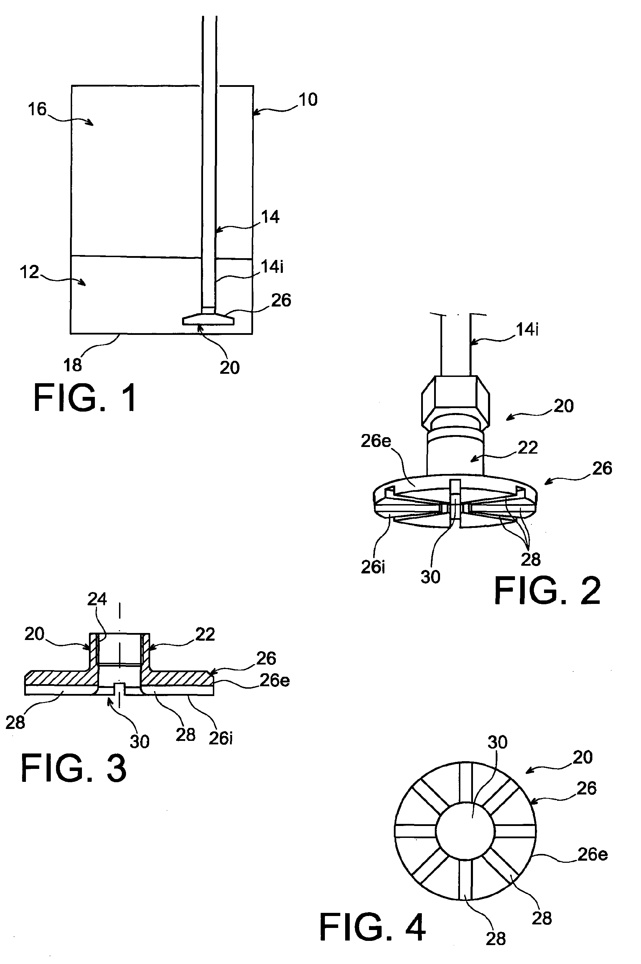

On a représenté à la figure 1 une cuve 10 contenant une certaine quantité de résine 12 destinée à être injectée pour former une pièce en matériau composite.

La quantité de résine 12 reçue dans la cuve 10 est prédéfinie de manière que toute cette quantité de résine sera utilisée lors de l'opération d'injection.

Le volume global de la cuve 10 est supérieur au volume de résine, pour que la résine 12 puisse subir une phase de dégazage dans laquelle des gaz contenus dans la résine 12 s'évacuent vers le volume d'air 16 situé dans la cuve 10, au-dessus de la résine 12.

Un tube de captage 14 plonge dans la cuve 10, pour prélever la résine 12 et la conduire vers un poste d'injection de la résine (non représenté).

La résine 12 est prélevée par l'application d'une pression au volume d'air 16 situé au-dessus de la résine 12, qui force la résine 12 à circuler dans le tube de captage 14 pour être amenée vers un poste d'injection de la résine 12.

Le tube de captage 14 comporte une extrémité inférieure 14i qui est située verticalement à proximité du fond 18 de la cuve 10.

L'extrémité inférieure 14i du tube de captage 14 porte un embout 20 de révolution réalisé de manière à limiter la formation d'un tourbillon pouvant provoquer l'aspiration d'air avec la résine 12.

Comme on peut le voir plus en détails aux figures 2, 3 et 4, l'embout 20 comporte un corps tubulaire 22 d'axe principal vertical qui prolonge vers le bas l'extrémité inférieure 14i du tube de captage 14.

Le corps tubulaire 22 est fixé à l'extrémité inférieure 14i du tube de captage 14, ici par vissage. Il comporte à cet effet un filetage 24 qui coopère avec un filetage complémentaire de l'extrémité inférieure 14i du tube de captage 14.

L'embout 20 comporte aussi une collerette horizontale 26 qui s'étend radialement vers l'extérieur depuis l'extrémité inférieure du corps tubulaire 22.

Cette collerette 26 permet de séparer l'embouchure du corps tubulaire 22, située globalement dessous la collerette 26, par laquelle la résine 12 est aspirée, de l'air extérieur, et plus principalement du tourbillon pouvant se former au-dessus de la collerette 26.

Selon un mode de réalisation préféré de l'embout 20, la collerette 26 comporte des rainures radiales 28 qui sont réalisées dans la face inférieure horizontale 26i de la collerette 26.

Ici, l'embout 20 comporte huit rainures radiales 28. Il sera compris que l'invention n'est pas limitée à ce nombre de rainures, qui peut être plus important ou plus faible.

Chaque rainure 28 est ouverte vers le bas et débouche radialement vers l'extérieur au niveau du bord cylindrique externe 26e de la collerette 26.

Aussi, la collerette 26 comporte une cavité centrale 30 de forme principale circulaire centrée sur l'axe principal vertical de l'embout 20, prolongeant l'embouchure du corps tubulaire 22, dans laquelle les rainures 28 débouchent radialement à leurs extrémités l'intérieures.

Ainsi, la résine aspirée circule dans les rainures 28 et converge vers la cavité centrale 30.

Les rainures 28 permettent de prélever de la résine en plusieurs endroits différents, ce qui limite la possibilité de formation d'un tourbillon de résine 12 autour de l'embout 20.

Selon le mode de réalisation représenté à la figure 1, l'embout 20 est disposé à distance verticale du fond 18 de la cuve 10, ce qui permet à de la résine 12 de circuler sous la face inférieure 26i de la collerette 26, pour qu'un maximum de résine atteigne la cavité centrale 30.

Cependant, comme on l'a dit plus haut, la cuve 10 est remplie d'une quantité de résine 12 prédéfinie, correspondant à la quantité de résine 12 qui sera injectée pour former une pièce en matériau composite.

Ainsi, si l'embout 20 est placé verticalement à distance du fond 18 de la cuve 10, une certaine quantité de résine ne peut être aspirée, et sera alors perdue.

Selon un mode de réalisation préféré, l'embout 20 est disposé de manière telle qu'il est en contact avec le fond 18 de la cuve 10.

Comme on l'a dit plus haut, chaque rainure 28 est ouverte vers le bas, ce qui permet d'aspirer la résine 12 qui est sur le fond 18 de la cuve.

Aussi, pour que le débit de résine 12 soit optimal, les rainures 28 sont réalisées de manière que la somme des sections de passage de toutes les rainures est au moins égale à la section du tube de captage 14.

De préférence, cette somme des sections est supérieure à la section du tube de captage 14, par exemple pour compenser des pertes de charge induites par la forme des rainures 28.

Selon le mode de réalisation représenté aux figures, le diamètre de la cavité centrale 30 de la collerette 26 est sensiblement égal à la section interne du corps cylindrique 22 et du tube de captage 14.

Selon une variante de réalisation non représentée, le diamètre de la cavité centrale 30 est supérieur au diamètre interne du corps cylindrique 22.

La cavité centrale 30 forme alors une chambre intermédiaire dans laquelle les rainures 28 débouchent.

## Revendications

1. Dispositif d'aspiration d'un liquide (12) contenu dans une cuve (10), qui comporte un tube de captage (14) qui est reçu dans la cuve (10) de manière telle qu'une extrémité inférieure (14i) dudit tronçon est immergée dans le liquide (12),
dont l'extrémité inférieure (14i) du tube de captage (14) est prolongée vers le bas par un embout (20) de révolution d'axe principal sensiblement vertical ouvert vers le bas et comportant une collerette (26) radiale externe, et
dont l'embout (20) comporte un corps tubulaire (22) qui prolonge verticalement vers le bas l'extrémité inférieure (14i) du tube de captage (14) et dont la collerette (26) s'étend radialement vers l'extérieur depuis l'extrémité inférieure du corps (22) tubulaire,
**caractérisé en ce que** la collerette (26) comporte des rainures (28) radiales par rapport à l'axe principal de l'embout (20) qui sont réalisées dans une face inférieure (26i) de la collerette (26).

2. Dispositif d'aspiration selon la revendication précédente, **caractérisé en ce que** chaque rainure (28) débouche au niveau du bord périphérique externe (26e) de la collerette (26).

3. Dispositif d'aspiration selon la revendication 1, **caractérisé en ce que** la section de chaque rainure (28) est déterminée de manière telle que la somme des sections de toutes les rainures (28) est sensiblement égale à la section du tube de captage (14).

4. Dispositif d'aspiration selon l'une quelconque des revendications 1 à 3, **caractérisé en ce que** la face inférieure (26i) de la collerette (26) comporte une cavité centrale (30) qui prolonge l'embouchure de l'embout (20) vers le bas, et dans laquelle les rainures (28) débouchent radialement vers l'intérieur.

5. Dispositif d'aspiration selon la revendication précédente, **caractérisé en ce que** la cavité (30) est globalement circulaire coaxiale au corps tubulaire (22) et de diamètre supérieur ou égal au diamètre interne du corps tubulaire (22).

6. Ensemble comportant une cuve (10) et un dispositif d'aspiration selon l'une quelconque des revendications précédentes agencé à l'intérieur de la cuve (10), **caractérisé en ce que** l'embout (20) est agencé verticalement à proximité du fond (18) de la cuve (10).

7. Ensemble comportant une cuve (10) et un dispositif d'aspiration selon l'une quelconque des revendications 1 à 5 agencé à l'intérieur de la cuve (10), **caractérisé en ce que** la collerette (26) est en appui contre le fond (18) de la cuve (10).

## Patentansprüche

1. Vorrichtung zum Ansaugen einer in einem Behälter (10) enthaltenen Flüssigkeit (12), die ein Entnahmerohr (14) umfasst, welches in dem Behälter (10) derart aufgenommen ist, dass ein unteres Ende (14i) des Teilstücks in die Flüssigkeit (12) eingetaucht ist,
wobei das untere Ende (14i) des Entnahmerohrs (14) nach unten durch ein Rotationsansatzstück (20) mit im Wesentlichen vertikaler Hauptachse, das nach unten offen ist und einen radialen Außenkragen (26) umfasst, fortgesetzt ist, und
wobei das Ansatzstück (20) einen rohrförmigen Körper (22) umfasst, der das untere Ende (14i) des Entnahmerohrs (14) vertikal nach unten fortsetzt, und wobei der Kragen (26) sich von dem unteren Ende des rohrförmigen Körpers (22) aus radial nach außen erstreckt,
**dadurch gekennzeichnet, dass** der Kragen (26) in Bezug auf die Hauptachse des Ansatzstückes (20) radiale Nuten (28) aufweist, die in einer Unterseite (26i) des Kragens (26) ausgebildet sind.

2. Ansaugvorrichtung nach dem vorhergehenden Anspruch, **dadurch gekennzeichnet, dass** jede Nut (28) im Bereich des äußeren Umfangsrandes (26e) des Kragens (26) ausmündet.

3. Ansaugvorrichtung nach Anspruch 1, **dadurch gekennzeichnet, dass** der Querschnitt einer jeden Nut (28) derart bestimmt ist, dass die Summe der Querschnitte aller Nuten (28) im Wesentlichen gleich dem Querschnitt des Entnahmerohrs (14) ist.

4. Ansaugvorrichtung nach einem der Ansprüche 1 bis 3, **dadurch gekennzeichnet, dass** die Unterseite (26i) des Kragens (26) eine mittlere Vertiefung (30) umfasst, welche die Mündung des Ansatzstückes (20) nach unten fortsetzt und in der die Nuten (28) radial nach innen münden.

5. Ansaugvorrichtung nach dem vorhergehenden Anspruch, **dadurch gekennzeichnet, dass** die Vertiefung (30) insgesamt kreisförmig, zu dem rohrförmigen Körper (22) koaxial ist und einen Durchmesser aufweist, der größer als der oder gleich dem Innendurchmesser des rohrförmigen Körpers (22) ist.

6. Anordnung, umfassend einen Behälter (10) und eine Ansaugvorrichtung nach einem der vorhergehenden Ansprüche, die innerhalb des Behälters (10) angeordnet ist, **dadurch gekennzeichnet, dass** das Ansatzstück (20) in der Nähe des Bodens (18) des Behälters (10) vertikal angeordnet ist.

7. Anordnung, umfassend einen Behälter (10) und eine Ansaugvorrichtung nach einem der Ansprüche 1 bis 5, die innerhalb des Behälters (10) angeordnet ist, **dadurch gekennzeichnet, dass** der Kragen (26) an dem Boden (18) des Behälters (10) in Anlage ist.

## Claims

1. Device for suctioning a liquid (12) contained in a vessel (10), that comprises a take-up tube (14) that is received in the vessel (10) in such a way that a bottom end (14i) of said section is submerged in the liquid (12),
of which the bottom end (14i) of the take-up tube (14) is extended downward by a rotationally symmetrical tip (20) which has a main substantially vertical axis open downward and which comprises an outer radial collar (26), and
of which the tip (20) comprises a tubular body (22) that vertically extends downward the bottom end (14i) of the take-up tube (14) and of which the collar (26) extends radially outward from the bottom end of the tubular body (22),
**characterised in that** the collar (26) comprises grooves (28) radial in relation to the main axis of the tip (20) which are carried out in a bottom face (26i) of the collar (26).

2. Device for suctioning according to the preceding claim, **characterised in that** each groove (28) exits onto the peripheral external edge (26e) of the collar (26).

3. Device for suctioning according to claim 1, **characterised in that** the section of each groove (28) is determined in such a way that the sum of the sections of all of the grooves (28) is substantially equal to the section of the take-up tube (14).

4. Device for suctioning according to any one of claims 1 to 3, **characterised in that** the bottom face (26i) of the collar (26) comprises a central cavity (30) that extends the mouth of the tip (20) downward, and wherein the grooves (28) exit radially inward.

5. Device for suctioning according to the preceding claim, **characterised in that** the cavity (30) is generally circular coaxial to the tubular body (22) and has a diameter greater than or equal to the inner diameter of the tubular body (22).

6. Group comprising a vessel (10) and a device for suctioning according to any one of the preceding claims arranged inside the vessel (10), **characterised in that** the tip (20) is arranged vertically in the vicinity of the bottom (18) of the vessel (10).

7. Group comprising a vessel (10) and a device for suctioning according to any one of claims 1 to 5 arranged inside the vessel (10), **characterised in that** the collar (26) presses against the bottom (18) of the vessel (10).
